# EUROPEAN PATENT APPLICATION

(11) **EP 2 977 746 A1**
(43) Date of publication of application: **27.01.2016**
(21) Application number: 15176714.2
(22) Date of filing: 14.07.2015
(51) Int. Cl.: G01N 21/27, G01N 21/3563, G01N 21/35, G01N 21/84

(54) **APPARATUS AND METHOD FOR TESTING MATERIALS**

(30) Priority: 23.07.2014 GB 201413080
(71) Applicant: Airbus Operations Limited, Bristol BS34 7PA (GB)
(72) Inventor: Laid, Adda, Bristol, BS34 7PA (GB); Tothill, Guy, Bristol, BS34 7PA (GB)
(74) Representative: Williams, Rhys Nicholas

(57) **Abstract**

The present invention concerns an apparatus and method for testing materials. More particularly, but not exclusively, this invention concerns an apparatus and method for testing materials which have a useable shelf-life. The invention also concerns an apparatus and method for testing materials which have a useable shelf-life dependent on the chemical degradation of the material. The invention provides a method of obtaining an indication of the lifespan of a chemically reactive material. The method comprises taking an infrared (IR) spectroscopic measurement (26) of the material. The measurement results are compared (28) to a database of previously obtained measurement results. Depending on the comparison (28) of the measurement result to the database of previously obtained measurement results, an indication (30) of a measure of the lifespan of the chemically reactive material is determined and provided. An infrared spectrometer (32) and a method of calibrating an infrared spectrometer is also provided.

## Description

### BACKGROUND OF THE INVENTION

The present invention concerns an apparatus and method for testing materials. More particularly, but not exclusively, this invention concerns an apparatus and method for testing materials which have a useable shelf-life. The invention also concerns an apparatus and method for testing materials which have a useable shelf-life dependent on the chemical degradation of the material.

Many materials used in the aerospace industry have a useable shelf-life, beyond which the material is no longer suitable for use when manufacturing or maintaining aircraft. An example of such a material is a resin-based prepreg material. Prior to use, such material is typically stored in rolls. Once the chemical reactivity and/or level of tack of the resin within the prepreg has dropped to a certain level, it is no longer suitable for use. When a roll of prepreg is manufactured, a use before date will be calculated based on the validated shelf-life for such a product. Typically, this date will be worked out simply on the observation and mechanical testing of a number of rolls of prepreg material as they age. However, the conditions in which a roll of prepreg is stored may significantly affect the shelf-life of the product. Therefore, a conservative use before date may be provided in order to avoid material being used which due to the storage conditions of the material is no longer suitable for use. This may lead to rolls of prepreg which are still usable being wasted.

Current methods of avoiding such waste includes mechanically testing small samples of a roll of prepreg prior to wasting it. However, such tests are time consuming and expensive.

The present invention seeks to mitigate the above-mentioned problems. Alternatively or additionally, the present invention seeks to provide an improved or alternative apparatus and method of testing materials.

### SUMMARY OF THE INVENTION

The present invention provides a method of obtaining an indication of the lifespan of a chemically reactive material, comprising the steps of:
taking an infrared (IR) spectroscopic measurement of the material;
comparing the measurement result to a database of previously obtained measurement results;
in dependence on the comparison of the measurement result to the database of previously obtained measurement results, determining and providing an indication of a measure of the lifespan of the chemically reactive material.

Based on the measure of the lifespan of the chemically reactive material, an assessment of whether or not the material is still suitable for use may be made. If the measure of the lifespan indicates that the material being tested is not reactive enough and/or not tacky enough for use, then the material may be scrapped. If the measure of the lifespan indicates that the material being tested is reactive and tacky enough for use, then the material may remain available for use. The method may be used to test chemically reactive materials which have passed their indicated use by date in order to determine whether the materials should be scrapped or not. By testing materials in this way, unnecessary wastage of material may be avoided.

The method also provides a quick and easy way of testing a chemically reactive material. The method provides a way of directly testing a chemically reactive material without requiring a sample of the material to be removed from the main body of material, for example a roll of prepreg material.

Advantageously, the method may provide an instantaneous, in-situ testing of a chemically reactive material. The method may be performed by any user with the suitable testing apparatus.

The method may be a method of obtaining an indication of the lifespan of a prepreg material. The prepreg material may be for use in the aerospace industry, for example manufacturing or maintaining an aircraft. A prepreg material is a term used in the art to describe pre-impregnated material fibres, where a matrix material, for example epoxy, is impregnated within the fibres. Prepreg is often used in the aerospace industry and provides a convenient material which is relatively easy to handle during use. Once a prepreg is applied during the construction or maintenance of an aircraft, the prepreg is cured to a final form.

The method may be a method of obtaining an indication of the lifespan of an adhesive material, for example an adhesive used in the aerospace industry. Organic based materials such as surfacing films, core splice adhesives, two-part epoxy paste adhesives/shims and liquid resists could be tested to provide lifespan indications. The IR spectroscopic measurement may be taken using a hand-held IR spectrometer, such as the 4100 ExoScan Series FTIR, available from Agilent Technologies, Santa Clara, USA. Using a hand-held IR spectrometer to take the IR spectroscopic measurement allows an engineer to make an easy assessment of the material on site. The spectrometer may provide a clear indication of whether the material is suitable for use, which may be read by any person using the spectrometer.

The method may allow for better stock management at an aircraft manufacturing or maintenance facility. For example, if a roll of prepreg material has come to the end of the use by period, an operator may test the roll of prepreg prior to scrapping the material. If still useable, then it may be used in preference to a roll of prepreg which is still within the use by period.

The method of testing a chemically reactive material may include the step of indicating the lifespan of the material according to two or more categories. Example categories may include "not acceptable", "just acceptable", and "acceptable". These categories may reflect whether or not a material has passed a useable shelf-life. For example, "not acceptable" could indicate a material is no longer suitable for use; "just acceptable" could indicate that a material is currently suitable for use but will no longer be suitable for use in the near future, or that the material is suitable for use, but with some loss of functionality; and "acceptable" could indicate that a material is suitable for use. Providing an indication of the reactivity of the material using such indicators allows the results of the testing to be easily read and understood.

The method may be applicable in many different scenarios, for example it may be used by airlines to test chemically reactive materials used during aircraft maintenance, it may be used by aircraft manufacturers to test chemically reactive materials used during aircraft production, it may be used in labs where chemically reactive materials are being studied, it may be used by a manufacturer of chemically reactive materials, or any other suitable industry or technical centre.

According to a second aspect of the invention there is also provided a method of calibrating an infrared (IR) spectrometer comprising the steps of:
storing a plurality of samples of a chemically reactive material in a plurality of different conditions,
testing each sample of chemically reactive material at specified intervals, the testing comprising taking an infrared spectroscopic measurement of the material and testing physical and chemical properties of the material;
compiling a database of the measurement results;
analysing the database to correlate the measured infrared spectra with the physical and chemical properties of the material; and
storing the database of correlated measurements such that the infrared spectrometer may access the results when making future infrared spectroscopic measurements of a material.

The method of calibration may include the step of categorising the physical and chemical properties of the material into two or more categories. Example categories may include "not acceptable", "just acceptable", and "acceptable". These categories may reflect whether or not a material has is useable. For example, "not acceptable" could indicate a material is no longer suitable for use; "just acceptable" could indicate that a material is currently suitable for use but will no longer be suitable for use in the near future, or that the material is suitable for use, but with some loss of functionality; and "acceptable" could indicate that a material is suitable for use.

According to a third aspect of the invention, there is provided an infra-red spectrometer comprising a control unit, the control unit arranged to receive measurement data obtained when the infra-red spectrometer is in use, the control unit including a processor and a memory device arranged such that the processor compares measurement data to calibration data stored in the memory device, and the processor providing an output based on the comparison of the measurement data to the calibration data.

The output may be a visual output. For example, the user readable output may comprise a screen arranged to display the words "not acceptable", "just acceptable", or "acceptable" depending on the comparison of the measurement data to the calibration data. The user readable output may comprise the display "traffic light" colours, with red corresponding to "not acceptable, amber corresponding to "just acceptable" and green corresponding to "acceptable". The output may be an audible output.

According to a fourth aspect of the invention there is provided a computer program product, the computer program product comprising a series of instructions, which when executed on an infrared spectrometer according to the third aspect of the invention, will result in the steps of the method according to the first or second aspect of the invention taking place.

It will of course be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

Embodiments of the present invention will now be described by way of example only with reference to the accompanying schematic drawings of which:
Figure 1 shows a representation of a method according to a first embodiment of the invention;
Figure 2 shows a representation of a method according to a second embodiment of the invention; and
Figure 3 shows a schematic representation of an infrared spectrometer according to a third embodiment of the invention.

### DETAILED DESCRIPTION

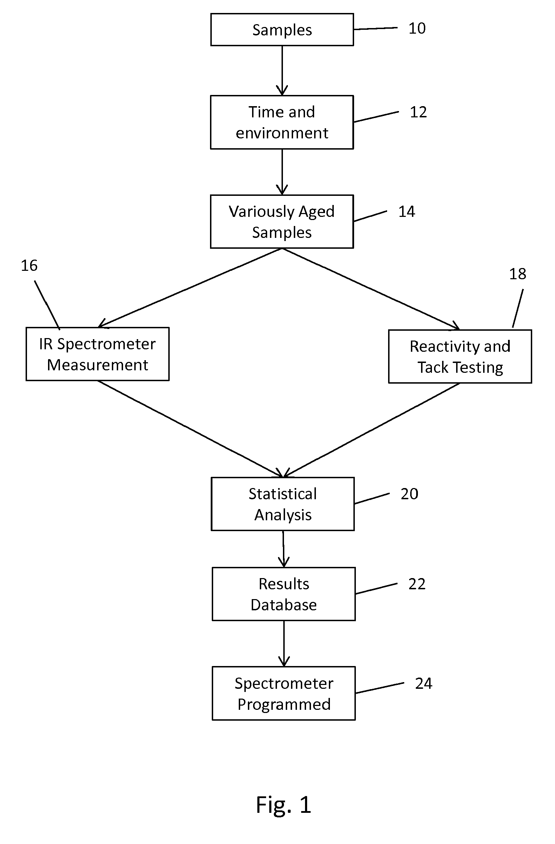

Figure 1 shows the calibration process according to a first aspect of the invention. Firstly, a number of prepreg samples are prepared at step 10. These prepreg samples are stored for a set time under set environmental conditions, as indicated by step 12. The samples are stored for a spread of different times and under different environmental conditions in order to provide a wide sample base for the calibration process. The range of conditions and number of samples required to give appropriate accuracy to the method is decided using standard statistical design of experiments techniques, as will be understood and commonly used by the skilled person. The design of experiments calculations may be performed using computer programs such as "JMP" available from SAS (www.jmp.com - as available in July 2014) and "R-Project", which is an open-source project (www.r-project.org as available in July 2014). This results in a collection of variously aged prepreg samples 14. Each of these samples is then examined by an infrared spectrometer 16, and also chemically tested for reactivity and tack tested 18. Therefore, for each sample, an infrared spectrum is obtained, together with a reactivity and tack measurement. These measurement results are stored in a database, and statistical analysis is performed to correlate infrared spectra with the physical properties of the sample, as shown in step 20. The analysis of the samples includes classifying samples as either "not acceptable", "just acceptable", or "acceptable" depending on the measured physical properties and whether the sample is still suitable for use or whether it should be scrapped, as indicated by step 22. In this case, "not acceptable" indicates a material is no longer suitable for use; "just acceptable" indicates that a material is currently suitable for use but will no longer be suitable for use in the near future, or that the material is suitable for use, but with some loss of functionality; and "acceptable" indicates that a material is suitable for use. The output may be in the form of different lights being illuminated on the testing device, or a screen associated with the testing device indicating the results, either as words and/or colours.

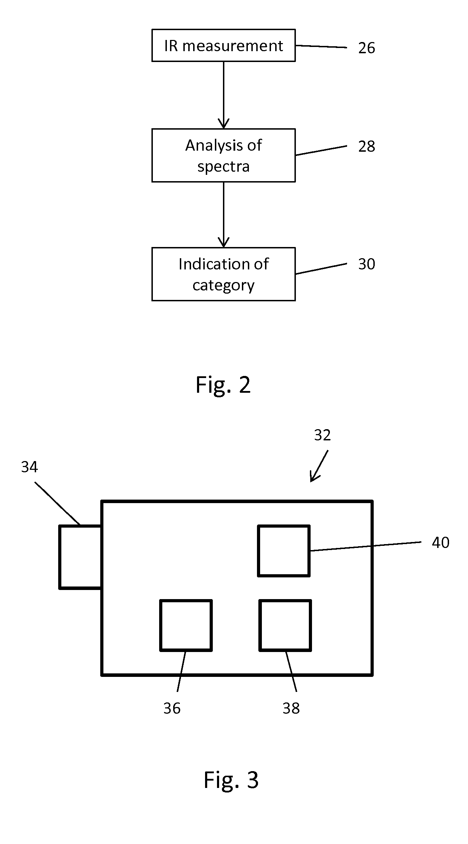

As the final step 24 in the calibration process, the infrared spectrometer is programmed with the results data such that future analysis of measurement data may be performed automatically, as described further with respect to figure 2.

Figure 2 shows a method according to a second embodiment of the invention. An infrared spectrometer, calibrated as described with reference to figure 1, is used to take a measurement of a sample of reactive material, as shown at step 26. The measurement spectra is then analysed by the spectrometer at step 28, where a comparison is made to the stored spectra results. The analysis of the spectra results in the determination of which category the reactive material falls into, and the spectrometer outputs a user readable indication of the category at step 30. Once an infrared spectrometer has been calibrated correctly, infrared spectrometers with the same specifications, for example the same make and model of infrared spectrometer, may be programmed with the appropriate calibration data without requiring the actual calibration process to be repeated.

Figure 3 shows a spectrometer according to a third aspect of the invention. The spectrometer 32 is a handheld spectrometer comprising an infrared measurement device 34, a control unit 36, and a memory unit 38, and a display 40. The infrared measurement device is of common construction as would be understood by a skilled person. An example infrared measurement device is the hand-held IR spectrometer, 4100 ExoScan Series FTIR, available from Agilent Technologies, Santa Clara, USA. The memory unit 38 includes a database of correlations between infrared spectra and the measurement results obtained during the calibration process as described with reference to figure 1. In order to take a measurement, a user holds the infrared measurement device up to a material and activates the device. The measurement results are analysed by the control unit 36 and compared to the database of results. Depending on the results of the analysis, the display 40 indicates what category the material falls into, displaying the term "not acceptable", "just acceptable", or "acceptable". In alternative embodiments the category may be indicated by a colour being displayed, for example a selection of red, amber, or green. Such a visual reference will be easily understood by an operator and may make the spectrometer easier to use.

Whilst the present invention has been described and illustrated with reference to particular embodiments, it will be appreciated by those of ordinary skill in the art that the invention lends itself to many different variations not specifically illustrated herein. By way of example only, certain possible variations will now be described. The method may be applied to assess thermal, ultra violet, and/or chemical damage to chemically reactive materials. The method may also be used to test the chemical characteristics of a material compared to a specific expected performance of that material, for example mechanical performance.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of obtaining an indication of the lifespan of a prepreg material, comprising the steps of:
taking an infrared (IR) spectroscopic measurement of the prepreg material;
comparing the measurement result to a database of previously obtained measurement results;
in dependence on the comparison of the measurement result to the database of previously obtained measurement results, determining and providing an indication of a measure of the lifespan of the prepreg material.

2. A method according to claim 1, wherein the infrared spectroscopic measurement is taken using a hand-held IR spectrometer

3. A method according to claim 1 or claim 2, wherein the prepreg material has passed an indicated use by date.

4. A method according to any preceding claim, comprising the step of indicating the lifespan of the material according to two or more categories.

5. A method according to claim 4, wherein the categories include "not acceptable", "just acceptable", and "acceptable".

6. A method of calibrating an infrared spectrometer comprising the steps of:
storing a plurality of samples of a chemically reactive material in a plurality of different conditions;
testing each sample of chemically reactive material at specified intervals, the testing comprising taking an infrared spectroscopic measurement of the material and testing physical and chemical properties of the material;
compiling a database of the measurement results;
analysing the database to correlate the measured infrared spectra with the physical and
chemical properties of the material; and
storing the database of correlated measurements such that the infrared spectrometer may access the results when making future infrared spectroscopic measurements of a material.

7. A method according to claim 6, including the step of categorising the physical and chemical properties of the material into two or more categories.

8. A method according to claim 7, wherein the categories reflect whether or not a material is useable.

9. An infra-red spectrometer configured to indicate the lifespan of a prepreg material, the spectrometer comprising a control unit, the control unit arranged to receive measurement data obtained when the infra-red spectrometer is in use, the control unit including a processor and a memory device arranged such that the processor compares measurement data relating to prepreg material to calibration data stored in the memory device relating to prepreg material, and the processor providing an output related to the lifespan of the measured prepreg material based on the comparison of the measurement data to the calibration data.

10. A computer program product, the computer program product comprising a series of instructions, which when executed on an infrared spectrometer according to claim 9 will result in the steps of the method according to claim 1 being performed.

11. A computer program product, the computer program product comprising a series of instructions, which when executed on an infrared spectrometer according to claim 9 will result in the steps of the method according to claim 6 being performed.
